**Europäisches Patentamt**

**European Patent Office**

**Office européen des brevets**

(19)

(11) Veröffentlichungsnummer: **0 347 946**

**A1**

(12) # EUROPÄISCHE PATENTANMELDUNG

(21) Anmeldenummer: **89111506.5**

(22) Anmeldetag: **23.06.89**

(51) Int. Cl.⁴: **A01D 34/08**

(30) Priorität: **23.06.88 DE 3821235**

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **Gail, Josef**
**Klausenweg 4**
**D-8890 Aichach(DE)**

(72) Erfinder: **Gail, Josef**
**Klausenweg 4**
**D-8890 Aichach(DE)**

(74) Vertreter: **Vogeser, Werner, Dipl.-Ing. et al**
**Patentanwälte + Rechtsanwälte Hansmann,**
**Vogeser, Boecker & Alber**
**Albert-Rosshaupter-Strasse 65**
**D-8000 München 70(DE)**

(54) **Mähgerät.**

(57) Mähgerät mit zwei in Querrichtung hin- und herschwingenden, das Mähgut gegeneinander abscherenden Messerbalken (2), die mit einer Reihe von in Zickzackform angeordneten Schneidkanten (4) versehen sind. Beim erfindungsgemäßen Mähgerät sind diese Messerbalken (2) kreisbogenförmig gestaltet und über vom Mittelbereich aus nach hinten laufende Streben (11) mit einem im hinteren Bereich des Mähgeräts angeordneten Schwenkpunkt (10) verbunden, der sich etwa mit dem Mittelpunkt des Kreisbogens (6) der Messerbalken (2) deckt. Das gegenläufige Hin- und Herschwenken der kreisbogenförmigen Messerbalken (2) wird dadurch erreicht, daß die Streben (11) bezüglich des Schwenkpunktes (10) um einen geringen Winkelbetrag oszillierend hin- und hergeschwenkt werden, was durch einen oberhalb der Streben (11) angeordneten Motor (15) mittels eines Exzenterantriebes (13) geschieht. Dadurch ergibt sich nicht nur eine einfache konstruktive Gestaltung des Mähgerätes, sondern wegen des relativ geringen Kraftaufwandes des hier verwendeten, zwischen zwei Schneidkanten (4) abscherenden Schnittes wird der Einsatz von akkumulatorengespeisten Elektromotoren sinnvoll, was besonders für den Privatbereich wünschenswerte akustische Vorteile bringt.

Fig. 2

EP 0 347 946 A1

# Mähgerät

Bei Mähgeräten wird im allgemeinen zwischen solchen für den landwirtschaftlich-gewerblichen Bereich und solchen für den privaten Bereich unterschieden. Die Zielsetzung der erst genannten professionellen Geräte geht meistens dahin, eine möglichst große Mähleistung pro Zeiteinheit, möglichst hohe Verschleißfestigkeit, lange Lebensdauer etc. zu ermöglichen. Da derartige Mähgeräte meist an die Antriebsquelle des bewegenden Fahrzeuges angekuppelt sind, sind solche Mähgeräte durch die für den Antrieb zur Verfügung gestellte Leistung kaum hinsichtlich Größe, Geschwindigkeit etc. eingeschränkt.

Bei Mähgeräten für den Privatbedarf dagegen, bei dem meist nur sehr begrenzte Flächen und auch nur in größeren Zeitabständen gemäht werden müssen, geht die Zielsetzung meist dahin, durch einfache baukonstruktive Gestaltung den Herstellungspreis für das Mähgerät möglichst gering zu halten. Aus diesem Grunde wird bei den heute üblichen sog. Rasenmähern meist ein von einem Zweitakt Verbrennungsmotor angetriebenes, rotierendes Schlagmesser verwendet, obwohl ein solcher schlagender Schnitt weder vom Kraftaufwand noch von der Qualität des Schnittergebnisses her eine besonders vorteilhafte Variante darstellt. Der Vorteil liegt vielmehr darin, daß sich hierdurch der mechanische Aufbau des Mähgerätes sehr einfach gestaltet. Als Nachteil muß allerdings in Kauf genommen werden, daß wegen des relativ hohen Kraftaufwandes mit einem solchen schlagenden Schnitt die lärmintensiven Verbrennungsmotoren bevorzugt werden müssen, da bei Verwendung von Elektromotoren der Energiebedarf zum Mähen einer durchschnittlichen, privaten Rasenfläche bereits so groß ist, daß nur eine Energieversorgung per Verbindungskabel aus dem Stromnetz in Frage kommt. Zusätzlich besteht bei derartigen handelsüblichen Rasenmähern der Nachteil, daß diese Geräte nur bei einer geringen Höhe des Mähgutes anwendbar sind, da bei zunehmender Größe des Mähgutes der Kraftaufwand zum Schieben des Mähgerätes immens ansteigt und darüber hinaus die abzuschlagenden, hochgewachsenen Grashalme bereits durch die Berührung mit der Vorderkante des Rasenmähers niedergedrückt werden, so daß die Halme nicht in einer definierten Länge gekappt werden, sondern diese Trennungsstelle abhängig von der Schräglage der Halme ist.

Im Gegensatz zu den Privatgeräten wird bei landwirtschaftlichen und gewerblichen Mähgeräten meist das Prinzip des abscherenden Schnittes angewandt, welches entweder in Form von rotierenden Messerwalzen verwirklicht ist, die an einer Abscherkante entlanglaufen, oder in Form von Messerbalken, deren z.B. zickzackförmige Schneidkante das Mähgut gegenüber einer ebenso geformten Abscherkante abschert, bedingt durch eine oszillierende Linearbewegung des Messerbalkens, aber ein Hin- und Herbewegen des Messerbalkens quer zur Mährichtung.

Der Übergang zwischen den professionellen und den Geräten für den Privatbereich ist dort fließend, wo im professionellen Bereich aufgrund der Unzugänglichkeit des Geländes nicht die vorhandenen Großgeräte eingesetzt werden können, sondern kleinere und leichtere Maschinen benötigt werden. So verwenden beispielsweise die meisten Bergbauern ein Mähgerät, welches der Benutzer mittels zweier Handgriffe, ähnlich denen einer Schubkarre, vor sich her führt, wobei das Mähgerät meist auf zwei auf einer Achse laufenden Rädern fährt, über der sich der Antriebsmotor, meist ebenfalls ein Zweitakt-Verbrennungsmotor befindet. Dieser Antriebsmotor treibt einerseits die beiden Laufräder zur Vorwärtsbewegung an und andererseits einen vor den Laufrädern quer angeordneten Mähbalken, bei dem entweder ein in Querrichtung linear oszillierender, zickzackförmiger Messerbalken knapp über einem darunter liegenden Abscherbalken mit ähnlicher Kontur läuft, oder bei denen sich zwei identische Messerbalken übereinander befinden, die sich in Querrichtung gegenläufig gerade hin- und herbewegen.

Derartige Geräte sind jedoch für den privaten Einsatz kaum geeignet, da einerseits der über einen Hebeltrieb bewirkte Antrieb der Messerbalken und auch der motorische Antrieb der beiden Räder relativ hohe Herstellungskosten verursacht und andererseits der verwendete Verbrennungsmotor den bei Rasenmähern berüchtigten Lärm entwickelt.

Es ist daher die Aufgabe der Erfindung, ein Mähgerät zu schaffen, welches trotz eines nur geringe Kräfte zum Antrieb benötigenden Schnittprinzips, welches den Einsatz von Akkumulatoren gespeisten, leisen Elektromotoren ermöglichen soll, mit geringem konstruktivem Aufwand und damit geringen Produktionskosten hergestellt werden kann.

Diese Aufgabe wird dadurch gelöst, daß als Mähprinzip der abscherende Schnitt verwendet wird, verwirklicht durch zwei gegenläufig oszillierende Messerbalken mit etwa zickzackförmiger Schneidkante, wie dies bereits teilweise aus der Landwirtschaft bekannt ist. Allerdings sind die verwendeten Messerbalken nicht gerade, sondern kreisbogenförmig mit einem in der Ebene des Messerbalkens, also fast waagrecht liegendem Radius. Diese bogenförmige Gestalt der Messerbalken ermöglicht es, die Messerbalken über nach hinten reichende Streben mit dem Mittelpunkt des Kreisbogens der Krümmung zu verbinden, und diese Streben um den als Drehpunkt dienenden Mittelpunkt des Kreisbogens geringfügig hin- und herschwenken zu lassen, wodurch sich eine oszillierende Bewegung der Messerbalken entlang des Kreisbogens ergibt. Ein solches Mähwerk kann auf einer von zwei Rädern getragenen Achse montiert und mittels zweier deichselförmiger Handgriffe, ähnlich derer bei einem Schubkarren, von einem hinter dem Mähgerät gehenden Benutzer geführt werden.

Der Antrieb für das oszillierende Hin- und Herschwenken der Streben und damit der kreisbogenförmigen Messerbalken geschieht mittels einer über einen Motor angetriebenen Welle, auf der für jeden Messerbalken ein exzentrischer Nocken angeordnet ist, welcher über ein zwischengeschaltetes Gleitstück die zu dem Messerbalken führende Strebe seitlich auslenkt. Da der Motor direkt über diesem Exzenterantrieb aufgesetzt werden kann, ist der mechanische Aufwand zum oszillierenden Antrieb der Messerbalken relativ gering. Aufgrund des für den abscherenden Schnitt der Messerbalken geringen Kraftaufwandes reicht für die im privaten Bereich vorhandenen Rasenflächen zur Energieversorgung des benötigten Elektromotors ein Akkumulator aus, so daß keine Verbindung zum Stromnetz per Kabel notwendig ist, was die Handhabung des Mähgerätes wesentlich erleichtert.

Die Messerbalken befinden sich mit den nach hinten zum Drehpunkt verlaufenden Streben in einer Ebene, welche vorteilhafter weise leicht nach vorne unten geneigt ist. Wird die Anordnung von Antriebsmotor und Akkumulator bezüglich der Achse zwischen den Rädern so gewählt, daß sich der Schwerpunkt des gesamten Mähgerätes knapp hinter der Achse befindet, so ist eine besonders leichte Führung des Mähgerätes möglich, indem durch Anheben mittels der Handgriffe das Mähgerät im Einsatz einerseits durch die beiden Räder und andererseits durch wenigstens eine weit vorne, in der Nähe der Messerbalken unter dem Mähgerät angeordnete Gleitkufe Bodenberührung hat. Vorzugsweise wird nur eine mittig angeordnete Gleitkufe verwendet werden, welche zusätzlich in der Höhe verstellbar ist, wodurch die Schnitthöhe des Mähgerätes eingestellt wird.

Die leichte Schrägstellung der Ebene, in der sich Messerbalken und Streben befinden, hat den zusätzlichen Vorteil, daß die gebogenen Messerbalken an ihren Enden einen geringfügig größeren Bodenabstand aufweisen als in der Mitte. Hierdurch wird bei geringen Bodenunebenheiten, in die die Räder eintauchen, vermieden, daß das entsprechende Ende der Messerbalken unerwünschterweise Bodenkontakt erhält, was zu einem Verschmutzen und Abstumpfen der dort angeordneten Schneidkanten führt.

Normalerweise werden Streben zwischen den Messerbalken und dem Schwenkpunkt im hinteren Bereich des Mähgerätes im mittleren Bereich der Messerbalken, also auf der Symmetrieachse des Mähgerätes, ausreichend sein. Dies bietet nicht nur den Vorteil der Gewichtseinsparung sondern auch die Möglichkeit, den Kreisbogen der Messerbalken so lang zu wählen, daß sich eine über den Abstand der Räder hinaus gehende Mähbreite ergibt. Dies bietet den Vorteil, daß die Räder immer auf bereits gemähtem Untergrund laufen, im Gegensatz zu den bisher üblichen Rasenmähern mit einem in einer horizontalen Ebene rotierenden Schlagmesser, bei dem das ungemähte Gras immer zuerst von den vorderen beiden der vier Räder niedergedrückt wird.

Es empfiehlt sich weiterhin bei dem erfindungsgemäßen Mähgerät die von den Messerbalken nach hinten führenden Streben sowie die darin untergebrachte Antriebsmechanik durch ein von dem oberen Messerbalken schräg nach oben und hinten verlaufendes, dachförmiges Ableitblech bzw. ein geschlossenes Gehäuse in diesem Bereich vor Verschmutzung durch das Mähgut zu schützen. Besonders bei langem Mähgut würde hierdurch erreicht, daß das abgemähte Material von der Mitte zu einer der beiden Seiten und damit vor die Räder zu liegen kommt, was bei ausreichend groß dimensionierten Rädern den Vorteil bietet, daß keine einzelnen, aufstehenden Büschel aus bereits abgemähtem Material stehenbleiben sondern diese gleichmäßig durch das Darüberrollen der Räder niedergelegt werden.

Da die Messerbalken nicht nur den vordersten sondern auch die äußersten seitlichen Punkte des Mähgerätes bilden, kann mit dem erfindungsgemäßen Mähgerät problemlos bis unmittelbar an ein festes Hindernis heran bzw. an den Kanten entlang gemäht werden, wobei zusätzlich die Höhe des Mähgutes nahezu unerheblich ist, was völlig im Gegensatz zu den Eigenschaften der herkömmlichen Rasenmäher steht. Um ein planes Aneinanderliegen der beiden Messerbalken sicherzustellen, ist eine mechanische Gegeneinanderpressung der Messerbalken selbst und/oder der nach hinten zum Schwenkpunkt führenden Streben notwendig. Damit sich das Gegeneinanderpressen der Streben auch ausreichend auf die Messerbalken auswirkt, empfiehlt es sich, die Streben aus Federstahl oder anderem elastischen Material auszubilden. Vorteilhafterweise sind an dem Messerbalken selbst Führungsklammern vorgesehen, die an einem der beiden Messerbalken befestigt sein können, und in deren Ausnehmung der zweite Messerbalken läuft, wodurch der gegenseitige Abstand der beiden Messerbalken begrenzt wird. Ergänzend hierzu empfiehlt es sich jedoch, die beiden nach hinten laufenden Streben durch eine nachstellbare Anpressvorrichtung gegeneinander zu drücken. Dies könnte dadurch geschehen, daß eine unterhalb der beiden Streben liegende Pressplatte mittels einer Verschraubung gegen den über den beiden Streben verlaufenden Rahmen des Mähgerätes gezogen wird, wobei wegen der zwischen den beiden Streben bzw. zwischen den Streben und dem Rahmen sowie der Strebe und der Pressplatte auftretenden Gleitreibung vorzugsweise Gleitplatten aus gut gleitfähigem Material vorzusehen sind. Die Verschraubung von Pressplatte und Rahmen erstreckt sich durch die Streben und die Gleitplatten hindurch, wofür wenigstens in den Streben Langlöcher vorgesehen sein müssen, um das Oszillieren der Streben nicht zu behindern.

Die Streben können durch den Schwenkpunkt im hinteren Bereich des Mähgerätes verschwenkt werden, in dem sie in diesem Drehpunkt mittels eines Lagers schwenkbar befestigt sind. Sie können jedoch auch in der Nähe dieses Schwenkpunktes fest mit dem Rahmen verbunden sein, sofern sie aus ausreichend elastischem Material wie beispielsweise Federstahl bestehen, welches eine ausreichende Auslenkung der Streben ermöglicht, um die im Bereich von etwa 5 cm liegende Amplitude des Messerbalkens zu gewährleisten.

Ebenfalls im hinteren Bereich des Mähgerätes ist die Deichsel zum Schieben des Mähgerätes angeordnet, an deren Enden sich die beiden nach hinten weisenden Handgriffe befinden. Selbstverständlich ist die Deichsel in ihrer Neigung gegenüber dem Mähgerät zwecks Anpassung an die Größe des Benutzers verstellbar. Obwohl das Mähgerät normalerweise von Hand vorwärts geschoben werden soll, kann selbstverständlich auch ein Antrieb der beiden Räder über den Antriebsmotor zwecks automatischem Vortrieb vorgesehen werden.

Anstelle der Auslenkung der Streben mittels des beschriebenen Exzenterantriebes kann auch eine Auslenkung der Streben über Elektroantriebe vorgesehen werden, was sich besonders bei der Verwendung von elektrischer Antriebsenergie empfehlen würde. Dabei sind Elektromagnete seitlich neben den Streben anzuordnen, die diese wechselseitig anziehen bzw. abstoßen, und so eine seitliche und wieder gegenläufige Auslenkung der beiden übereinanderliegenden Streben bewirken. In diesem Falle wäre besonders die starre Befestigung der Streben in der Nähe des Schwenkpunktes und die Verwendung von Streben aus Federstahl zu empfehlen, da bei einer Auslenkung derartiger Streben das Zurückfedern der Streben über den Totpunkt hinaus bereits aufgrund der Eigenschaften des Federstahles erfolgt, und somit die Funktion der Elektromagnete unterstützen würde.

Ferner empfiehlt es sich, die Messerbalken nicht wie bisher in der Landwirtschaft üblich mit einzelnen aufgenietet oder aufgeschraubten, etwa dreieckigen Messerplatten mit je zwei Schneidkanten zu bestücken, sondern die Messerplatten einstückig auszubilden, was die Messerbalken in der Herstellung verbilligt. Zusätzlich bietet dies den Vorteil, daß bei sehr langen Messerbalken mit entsprechend großem Segmentwinkel des Kreisbogens die Schneidkanten nicht immer im selben Winkel zum Kreisbogen stehen müssen, sondern z.B. die sehr weit außen am Messerbalken liegenden Schneidkanten mehr auf die Vorwärtsrichtung des Mähgeräts ausgerichter sind, als auf den vom Schwenkpunkt zur jeweiligen Schneidkante weisenden Radius.

Eine Ausführungsform gemäß der Erfindung wird im folgenden anhand der Figuren beispielhaft näher erläutert:
Es zeigen:

Figur 1 eine Seitenansicht des Mähgerätes;

Figur 2 eine Aufsicht auf das Mähgerät bei abgenommenem Ableitblech;

Figur 3 die Befestigung des Messerbalkens an den U-Profilen der Strebe in einer Aufsicht;

Figur 4 einen Schnitt durch die Darstellung der Figur 3 entlang der Linie IV-IV;

Figur 5 eine teilgeschnittene Aufsicht auf den Exzenterantrieb entlang der Linie V-V in der Figur 1;

Figur 6 eine Querschnittsdarstellung durch die Figur 5 entlang der Linie VI-VI;

Figur 7 eine detaillierte Schnittdarstellung der Anpressvorrichtung;

Figur 8 einen Querschnitt durch die beiden Messerbalken entlang der Linie VIII-VIII in Figur 2.

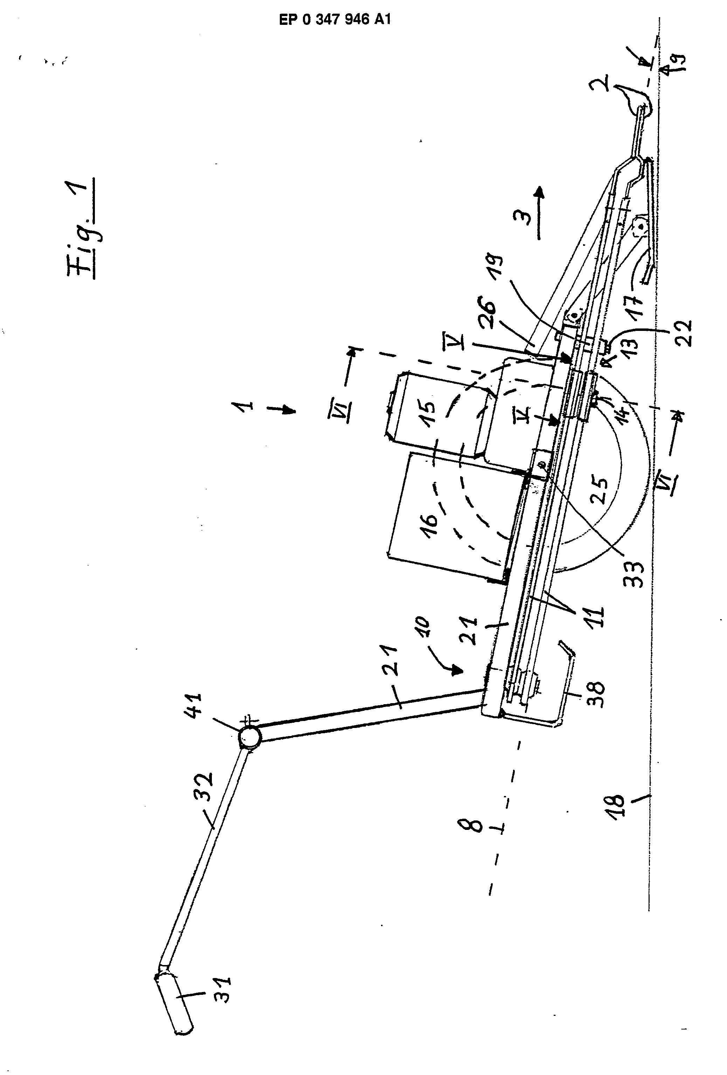

Figur 1 zeigt das Mähgerät in der Seitenansicht in der Stellung, wie es zum Mähen gehalten werden muß, wofür normalerweise jedoch ein Benutzer notwendig ist, da der Schwerpunkt des Mähgerätes 1 vorzugsweise hinter der Achse 33 liegen soll, so daß das Mähgerät 1 ohne äußere Einwirkung normalerweise auf der Auflage 38 im hinteren Bereich des Mähgerätes 1 aufliegt.

Wird das Mähgerät 1 jedoch an den Griffen 31, die sich am Ende der Deichsel 32 am hinteren Ende des Mähgerätes 1 befinden, vom Benutzer so weit angehoben, daß das Mähgerät 1 nicht nur mit den Rädern 25 sondern auch mit der im vorderen Bereich angeordneten Gleitkufe 17 Bodenberührung hat, so befindet sich das Mähgerät 1 in der zum Mähen geeigneten Stellung, wobei die Ebene 8 der Messerbalken 2 in einem spitzen Winkel 9 gegen den Untergrund 18 nach vorne geneigt ist. Dieser Winkel, und damit auch die Schnitthöhe,in der das Mähgut abgeschnitten werden soll, läßt sich durch eine Einstellung der Gleitkufe 17 verändern. Hierzu ist es lediglich notwendig, die Befestigungsschraube 39, mit der die Gleitkufe 17 am Rahmen 21 befestigt ist, zu lösen und nach Einstellung der gewünschten Stellung der Gleitkufe erneut fest zu ziehen.

Trotz geringfügiger Veränderung der Stellung der Gleitkufe 17 bezüglich des Rahmens 21 befindet sich die Gleitkufe 17 nach wie vor möglichst weit vorne, in der Nähe der beiden Messerbalken 2, und teilweise sogar unterhalb dieser Messerbalken 2, denn erst dadurch ist sichergestellt, daß bei einem unebenen Untergrund trotz ständiger Bodenberührung der Gleitkufe 17 die Schnitthöhe des Mähgutes nicht allzu stark differiert.

In Figur 1 sind ferner die von den Messerbalken 1 zum Schwenkpunkt 10 im hinteren Bereich des Mähgerätes führenden Streben 11 zu erkennen, welche sich unterhalb des Rahmens 21 befinden. Oberhalb dieses Rahmens 21 sind der elektrische Motor 15 aufgebaut sowie der für die Stromversorgung notwendige Akkumulator 16. Vom Motor 15 aus erstreckt sich über ein zwischengeschaltetes Getriebe die Antriebswelle 14 nach unten, welche über den Exzenterantrieb 13 die beiden Streben 11 zum Verschwenken anregt, wodurch die gegenläufigen, parallelen Bewegungen der Messerbalken 2 bewirkt werden. Vor dem Exzenter 13, und zwar möglichst weit vorne am Rahmen 21 ist die Spannschraube 22 zu erkennen, mit deren Hilfe in der Anpressvorrichtung 19 die beiden Streben 11 und damit auch die Messerbalken 2 gegeneinander und auch in eine möglichst definierte Lage bezüglich des Rahmens 21 gedrückt wird. Sowohl

Radius 7 auf, dessen Mittelpunkt mit dem Schwenkpunkt 10 zusammenfällt, so daß also der die Krümmung der Messerbalken 2 bestimmende Kreisbogen innerhalb der Ebene 8 der Messerbalken liegt, welche gegenüber dem Untergrund 18 um einen spitzen Winkel 9, vorzugsweise etwa 10°, schräg nach vorn geneigt ist.

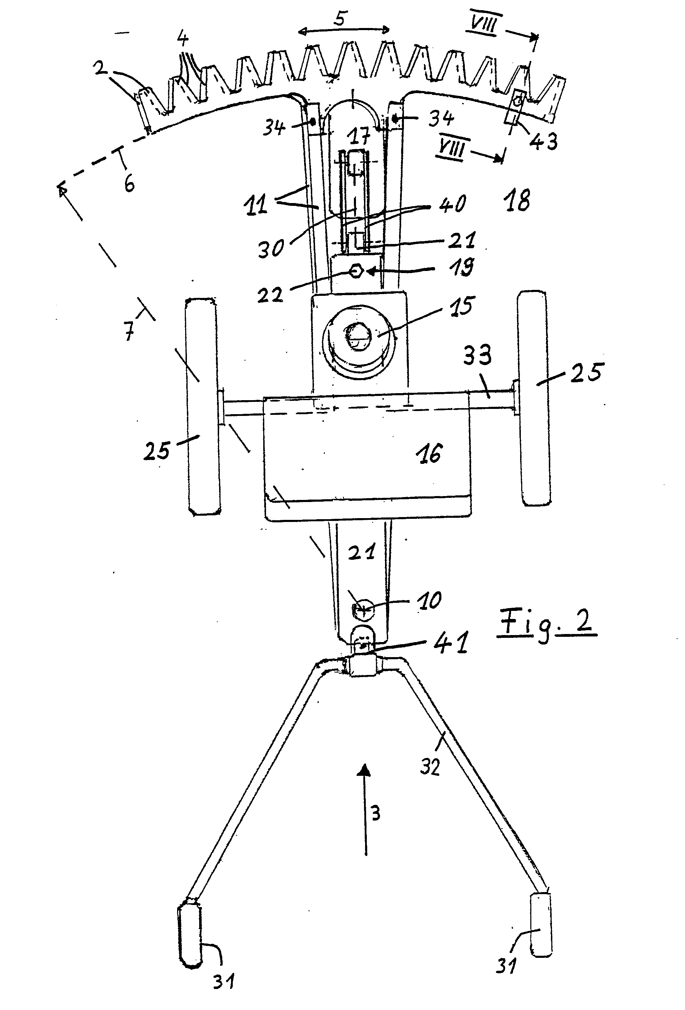

Figur 2 zeigt ferner, wie die einzelnen Schneidkanten 4 der der Messerbalken 2 in Form etwa einer Zickzacklinie angeordnet sind, welche sich entlang der Längserstreckung V der Messerbalken, also im wesentlichen quer zur Fortbewegungsrichtung III des Mähgerätes, erstreckt. Da die Kontur der beiden Messerbalken 2 in bezug auf die Anordnung der Schneidkanten deckungsgleich ist, ergibt sich durch das gegenläufige, oszillierende Hin- und Herschwingen der beiden Messerbalken 2 entlang ihres Kreisbogens 6 ein abscherender Schnitt zwischen je zwei Messerkanten 4 des unteren und oberen Messerbalkens 2, wobei diese Schneidkanten 4 in bekannter Weise in einem spitzen Winkel gegeneinander laufen, welcher dem spitzen Winkel entspricht, in dem die Schneidkanten 4 innerhalb der jeweiligen Zickzacklinie zueinanderstehen.

In Figur 2 ist das Mähgerät 1 ferner ohne das Ableitblech 26 dargestellt, so daß einerseits die Gleitkufe 17 zu erkennen ist, einschließlich der beweglichen Hebel 14, mittels derer sie höhenverstellbar am Rahmen 21 befestigt ist.

Durch das Fehlen des Ableitbleches 26 in dieser Darstellung ist ebenfalls die Spannschraube 22 im vorderen Bereich des Rahmens 21 zu erkennen, welche innerhalb der gesamten Anpressvorrichtung

den Schwenkpunkt 10 oszillierend schwenkend angetrieben werden könnten, bieten doch Messerbalken 2, die in der erfindungsgemäßen Art in Form eines breiten Kreisbogens geformt sind, den Vorteil eines besseren Schnittergebnisses, da bei der beschriebenen Krümmung der Messerbalken 2 beim Gegeneinanderbewegen der beiden Messerbalken eine Bewegung stattfindet, die ausschließlich Komponenten entlang der Längserstreckung 5 der beiden Messerbalken aufweist, wogegen ein entsprechender Antrieb von geraden Messerbalken jeweils auch Bewegungskomponenten aufweisen würde, welche quer zu der Längserstreckung 5 der Messerbalken verlaufen würden. Hierdurch würde jeweils ein Hereinziehen bzw. Herausdrücken des Mähgutes in bzw. aus den sich ändernden V-förmigen Zwischenräumen zwischen zwei Schneidkanten 4 stattfinden, wodurch ein höherer Kraftbedarf für den Schnitt und auch eine erhöhte Gefahr des Verstopfens zwischen den Messerbalken 2 gegeben wäre.

Figur 2 zeigt ferner, daß der Akkumulator 16, der einen großen Teil des Gewichts des gesamten Mähgerätes ausmacht, knapp hinter der Achse 33 angeordnet ist, wodurch sich ein ebenfalls hinter der Achse 33 liegender Gesamtschwerpunkt des Mähgerätes 1 ergeben soll. Somit liegt das Mähgerät im Ruhezustand mit dem hinteren Teil des Rahmens 21 auf dem Untergrund 18 auf, sofern es nicht vom Benutzer über die Handgriffe 31 soweit angehoben wird, daß die im vorderen Bereich angeordnete Gleitkufe 17 den Boden berührt, wie es zum Mähen mit konstanter Schnitthöhe empfehlenswert ist.

Figur 2 zeigt auch die in der Aufsicht etwa V-förmige oder U-förmige Form der Deichsel 32, an deren freien Enden sich die Handgriffe 31 zum Führen des Mähgerätes befinden, und die Befestigung der Deichsel 32 an ihrem Scheitelpunkt am Rahmen 21 des Mähgerätes 1, welche mittels einer Klemmschelle 41 erfolgt, so daß die Neigung der Deichsel 32 einstellbar ist.

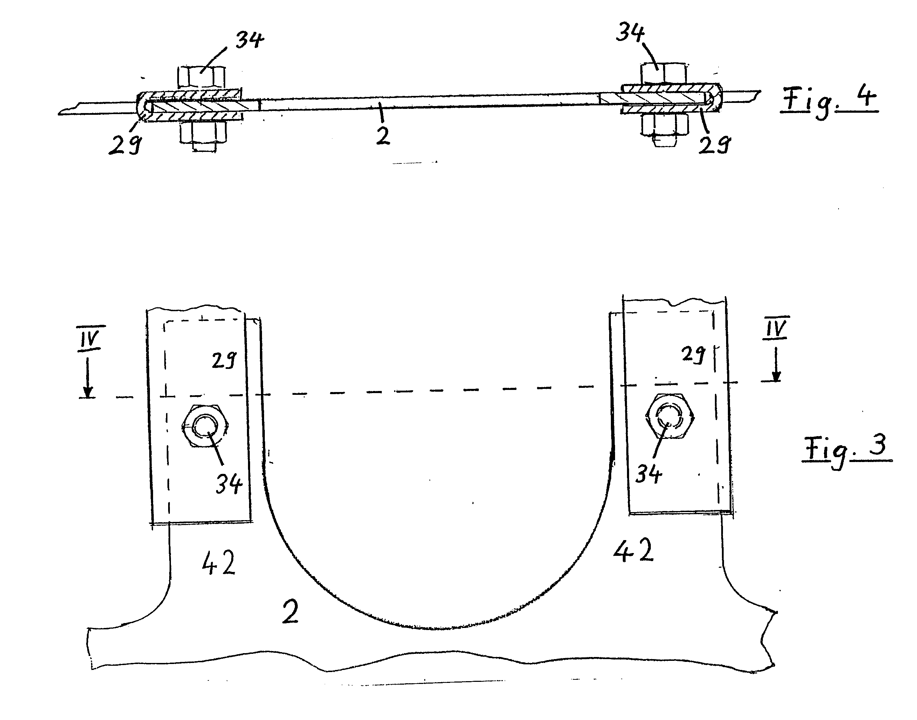

Figur 3 zeigt nochmals einen Detailausschnitt aus der Aufsicht der Figur 2, nämlich die Verbindung eines Messerbalkens 2 mit seiner zugehörigen Strebe 11. Der Messerbalken 2 ist, wie Figur 3 zu entnehmen, lediglich mittels zweier Schrauben 34 mit seiner Strebe 11 verbunden, die im hier dargestellten Fall lediglich aus zwei annähernd parallel verlaufenden U-Profilen 29 besteht, die innerhalb der Ebene 8 der Messerbalken bewegt werden. Diese beiden U-Profile 29 bestehen vorzugsweise aus Federstahl und sind so angeordnet, daß die offenen Seiten des U-Profiles gegeneinander gewandt sind. Mittels entsprechender Fortsätze 42 des Messerbalkens 2 kann dieser in den Hohlraum der beiden U-Profile eingeführt und mittels der Schrauben 34 dort verklemmt werden, wie dies die Querschnittsdarstellung der Figur 4 entlang der Linie IV-IV der Figur 3 zeigt.

Auch Figur 5 zeigt eine Detaildarstellung, und zwar des Exzenterantriebes 13 in einer der Figur 2 entsprechenden Perspektive, wobei die Antriebswelle 14 entlang der Ebene V-V der Figur 1 freigeschnitten wurde.

Dadurch ist in Figur 5 zu erkennen, wie die untereinanderliegenden und durch jeweils zwei U-Profile 29 verwirklichten Streben 11 oszillierend und im wesentlichen quer zur Längsachse 30 der Streben 11 angetrieben werden.

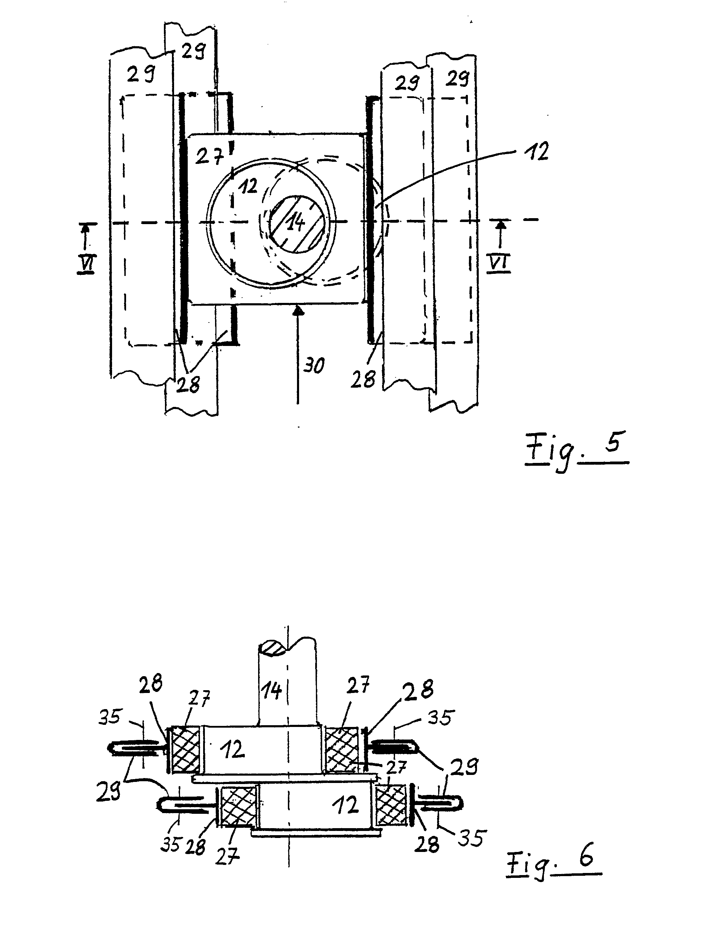

Ergänzend hierzu ist in Figur 6 eine Querschnittsdarstellung durch den Exzenterantrieb 13 entlang der Linie VI-VI der Figur dargestellt.

Aus diesen beiden Figuren ist zu entnehmen, daß die vom Motor bzw. Getriebe kommende Antriebswelle 14 zwei Nocken 12 aufweist, die einen kreisförmigen Umfang besitzen, wie Figur 5 zeigt, und bezüglich der axialen Erstreckung der Antriebswelle 14 in gegensätzliche Richtungen weisen. Jeder dieser Nocken 12 läuft in einem Gleitstück 27 hoch, welches eine auf die ringförmige Kontur des Nockens 12 gestimmte, zylindrische Aussparung aufweist. Wird nun die Antriebswelle 14 in Drehung versetzt, so laufen die Nocken 12 jeweils in den Gleitstücken 27 hoch, wodurch wegen der Exzentrizität der Nocken 12 bezüglich der Antriebswelle 14 die Gleitstücke selbst in eine Kreisbewegung gezogen werden.

Diese Kreisbewegung der Gleitstücke 27 wird dadurch in Komponenten der Längsachse 13 und hierzu quer verlaufende Komponenten zerlegt, daß die Gleitstücke 27 zwangsweise entlang von Linearführungen 28, die parallel zur Längsachse 30 der Streben 11 verlaufen, verschieblich geführt sind. Diese Längsführungen 28 können beispielsweise aus Stücken von T-Profilen bestehen, deren mittlere Strebe im Hohlraum des U-Profiles 29 mittels Schrauben 35 verschraubt wird.

Dadurch bewegen sich die Gleitstücke 27 bei Drehung der Antriebswelle 14 einerseits oszillierend entlang der Linearführungen 28 hin und her und lenken andererseits die U-Profile 29 der Streben 11 oszillierend quer zur Längsachse 30 der Streben gegenläufig aus. Dieses Auslenken der U-Profile 29 quer zur Längsachse 30 bewirkt ein Verschwenken der Streben 11 und damit auch der Messerbalken 2 um den Schwenkpunkt 10.

Da somit im Betrieb zwischen den Gleitstücken 27 und den Linearführungen 28 Gleitreibung auftritt, ist es sinnvoll, hierfür eine Materialpaarung mit möglichst geringem Reibwert bei gleichzeitig hoher Verschleißfestigkeit zu wählen. Zu diesem Zweck könnten beispielsweise die Linearführungen 28 ebenso wie die Nocken 12 der Antriebswelle 14 aus Metall hergestellt sein, die Gleitstücke 27 dagegen aus hitzebeständigem und abriebfestem Kunststoff. Denkbar wären jedoch auch andere Materialpaarungen wie Stahl/Stahl oder Stahl/Bronze, wozu im allgemeinen jedoch eine zusätzliche Schmierung dieser Gleitreibung notwendig ist.

Ebenso bestehen zur Lagerung der Nocken 12 in den Gleitstücken 27 grundsätzlich die Möglichkeiten der Gleitlagerung oder auch der Kugellagerung.

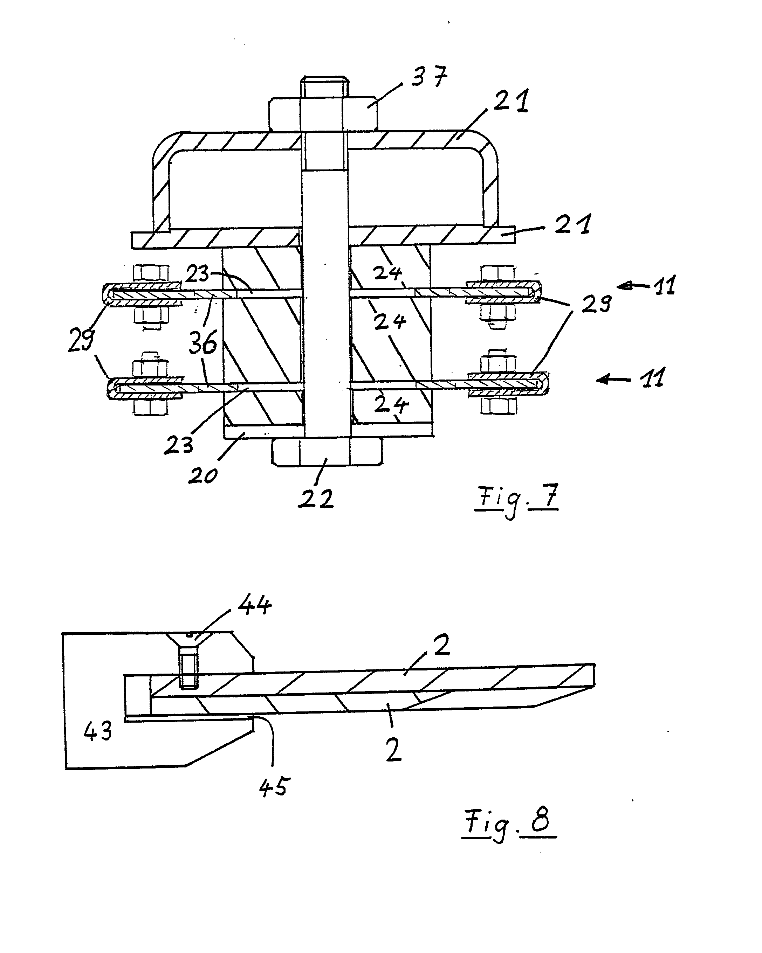

Als weitere Detaildarstellung ist in Figur 7 ein Schnitt durch die Anpressvorrichtung 19, wie in Figur 1 zu erkennen, quer zur Ebene 8 der Messerbalken dargestellt: Da das Mähgut durch Abscheren mittels zweier zu den zwei Messerbalken 2 gehörenden Schneidkanten 4 abgetrennt werden soll, ist es notwendig, daß die beiden Messerbalken 2 beim Gegeneinanderlaufen eng aneinander anliegen. Gleitzeitig müssen die Messerbalken 4 jedoch bezüglich des Rahmens 21 des Mähgerätes eine möglichst genau definierte Lage einnehmen, um eine gleichmäßige, einstellbare Schnitthöhe des Mähgutes erzielen zu können. Dazu ist es notwendig, einerseits die beiden Messerbalken 2 bzw. die Ihnen zugeordneten Streben 11 möglichst weit vorne in der Nähe der Messerbalken 2 gegeneinander zu pressen und andererseits die beiden Messerbalken 2 bzw. die ihnen zugeordneten Streben 11 gegen den Rahmen 21 des Mähgerätes 1 bezüglich der Höhe zu fixieren. Da der Rahmen 21 aus Gewichtsgründen nicht unbedingt bis zu den Messerbalken 2 nach vorne fortgeführt wird, sondern möglichst wenig über den Exzenterantrieb 13 nach vorne ragt, wie in Figur 1 zu erkennen ist, ist es notwendig, am vorderen Ende des Rahmens 21 eine Anpressvorrichtung 19 zu schaffen, die die dargestellten Aufgaben erfüllen kann.

Diese besteht im wesentlichen aus einer Spannschraube 22, die mittels einer breiteren Pressplatte 20, Querverbindungen 36, die je zwei gegenüberliegende U-Profile 29 zu einer Strebe 11 verbinden, gegen den darüber liegenden Rahmen 21 pressen, der in diesem Falle aus einem U-Profil mit einem Flachprofil besteht, welches das U-Profil zu einem geschlossenen Profil ergänzt. Da sich die beiden übereinanderliegenden Streben 11 zwar jeweils parallel zur Ebene 8, jedoch gegenläufig bewegen, entstehen Relativbewegungen jeweils zwischen dem Rahmen 21, der ersten Strebe 11, der zweiten Strebe 11 sowie der Press platte 20. Um bei der dadurch entstehenden Gleitreibung zwischen den relativ zueinander bewegten Teilen möglichst wenig Antriebskraft zu verlieren, werden zwischen den relativ zueinander bewegten Teilen Gleitplatten 24 angeordnet, welche aus einem Material mit geringem Reibwert bestehen bzw. welche zusammen mit dem Material des Rahmens 21, den Querverbindungen 36 und der Pressplatte 20 eine möglichst geringe Reibung ergeben. Um die Linearbewegungen der Querverbindungen 36 quer zur Längsachse 30 der Streben 11 zu ermöglichen, erstreckt sich die Spannschraube 22 von unten nach oben der Reihe nach durch die Pressplatte 20, eine erste Gleitplatte 24, die erste Querverbindung 36, eine weitere Gleitplatte 24, die zweite Querverbindung 36, eine weitere Gleitplatte 24 und den Rahmen 21 hindurch, gegen den sie mittels einer Mutter 37 verspannt wird. Dabei weisen die Gleitplatten 24 ebenso wie die Pressplatte 20 und der Rahmen 21 Bohrungen entsprechend der Größe der Spannschraube 23 auf, wogegen die Querverbindungen 36 mit Langlöchern 23 ausgestattet sein müssen, deren Längsachse sich, entsprechend der Linearbewegungen der Streben 11 quer zur Längsachse 30 der Streben 11 erstreckt. Dadurch kann bei der oszillierenden Bewegung der Streben 11 der Schaft der Spannschraube 22 die Langlöcher 23 der Querverbindungen 36 durchlaufen, wobei die beiden Querverbindungen 36 jeweils entlang der Oberfläche von zwei Gleitstücken 24 entlanggleiten, jedoch durch die Spannschraube 22 mit einem definierten Abstand zueinander sowie zum Rahmen 21 gehalten werden.

Um jedoch auch die beiden Messerbalken 2 direkt aneinander zu halten, sind möglichst weit außen an den beiden Messerbalken 2, in der Aufsicht der Figur 2 gesehen U-förmige Klammern 43 an der Hinterkante der Messerbalken 2 angeordnet, die im Querschnitt entlang der Linie VIII-VIII derFigur 2 in der Detaildarstellung der Figur 8 dargestellt sind. Diese U-förmigen Klammern 43 reichen um die Hinterkanten der beiden Messerbalken 2 herum, welche in den Hohlraum des U-Profils hineinragen. Die Klammern 43 sind mit jeweils einem der Messerbalken 2 verschraubt, und zwar am besten mit Hilfe wenigstens einer Senkschraube 44, um das über die Messerbalken 2 nach hinten schiebende Mähgut möglichst wenig zu behindern. Aufgrund der Befestigung der Klammer 43 an einem der Messerbalken 2 ergibt sich, bei Abstimmung des Abstandes der beiden Schenkel des U-Profiles der Klammer 43 auf die Gesamthöhe der beiden Messerbalken 2 zusammen wiederum eine Gleitreibung zwischen dem anderen Messerbalken 2 und einer Innenfläche der Klammer 43, weshalb es sinnvoll ist, auf dieser Innenfläche der Klammer 43 einen Belag 45 aus einem Material mit geringem Reibwert vorzusehen. Sollte dieser Gleitbelag 45 verschlissen sein, so kann durch Lösen der Senkschraube 44 die Klammer 43 entfernt und ersetzt oder aber mit neuem Gleitbelag 45 versehen werden. .

**Ansprüche**

1. Mähgerät mit zwei Messerbalken, die jeweils eine Vielzahl von scharfen Schneidkanten aufweisen, die etwa in Form einer Zickzacklinie angeordnet sind, welche im wesentlichen quer zur Fortbewegungsrichtung des Mähgerätes verläuft, und wobei die beiden Messerbalken parallel eng aneinander und übereinander liegen und in Richtung ihrer Längserstreckung phasenverschoben oszillieren, so daß dabei das Mähgut zwischen je einer Schneidkante des oberen und unteren Messerbalkens abgeschert wird,
**dadurch gekennzeichnet, daß**
- die Messerbalken (2) eine übereinstimmende Krümmung in Form eines Kreisbogens (6) aufweisen, dessen Radius (7) in der Ebene (8) des Messerbalkens (2) liegt und
- die oszillierende Bewegung der Messerbalken (2) durch oszillierendes Verschwenken um einen geringen Winkelbetrag der zwischen Messerbalken (2) und Schwenkpunkt (10) der Schwenkbewegung angeordneten Streben (11) geschieht, wobei etwa der Mittelpunkt des Kreisbogens (6) als Schwenkpunkt (10) dient.

2. Mähgerät nach Anspruch 1,
**dadurch gekennzeichnet, daß** die Ebene (8) der Messerbalken (2) in einem spitzen Winkel(9) so gegen den Untergrund (18) geneigt ist, daß der Schwenkpunkt (10) höher liegt als die Messerbalken (2).

3. Mähgerät nach Anspruch 1 oder 2,
**dadurch gekennzeichnet, daß** das oszillierende, gegeläufige Schwenken der Streben (11) durch einen Exzenterantrieb (13) geschieht, wobei die exzentrischen, radial in gegensätzliche Richtungen weisenden Nocken (12) einer senkrecht zur Ebene (8) stehenden Antriebswelle (14) jeweils in Gleitstücken (27) gelagert sind, welche auf Grund der Drehung der Nocken (12) entlang von Linearführungen (28) entlang der Längsachse (30) der Streben (11) linear oszillieren.

4. Mähgerät nach Anspruch 3,
**dadurch gekennzeichnet, daß** die Antriebswelle (14) durch einen elektrischen Motor (15) angetrieben wird, der durch einen Akkumulator (16) mit Energie versorgt wird.

5. Mähgerät nach Anspruch 1, 2 oder 3,
**dadurch gekennzeichnet,** daß die Streben (11) durch seitlich angeordnete, entsprechend ansteuerbare Elektromagnete durch wechselseitiges Anziehen und Abstoßen in oszillierende, gegenläufige Schwingungen versetzt werden.

6. Mähgerät nach einem der vorhergehenden Ansprüche,
**dadurch gekennzeichnet,** daß im vorderen Bereich des Mähgerätes (1) in der Nähe der Messerbalken (2) wenigstens eine höhenverstellbare Gleitkufe (17) angeordnet ist, die das Mähgerät (1) zusammen mit zwei auf einer Achse (33) angeordneten Rädern (25) gegen den Untergrund (18) abstützt.

7. Mähgerät nach einem der vorhergehenden Ansprüche,
**dadurch gekennzeichnet, daß** die Streben (11) an den Messerbalken (2) jeweils nur in deren mittlerem Bereich befestigt sind.

8. Mähgerät nach einem der Ansprüche 3 bis 7,
**dadurch gekennzeichnet, daß** zwischen dem Exzenterantrieb (13) und den Messerbalken (2) eine Anpressvorrichtung (19) zum in etwa vertikalen Gegeneinanderpressen von oberer und unterer Strebe (11) und damit der beiden Messerbalken (2) angeordnet ist, wobei der Anpressdruck durch eine gegen den tragenden Rahmen (21) der Mähgerätes (1) mittels einer Pressplatte (20) aufgebracht wird, die mit Hilfe wenigstens einer Spannschraube (22) verspannt wird, wobei die Spannschrauben (22) sich durch Langlöcher (23) der Streben (11) hindurch erstrecken und zwischen den relativ zueinander bewegten Teilen Gleitplatten (24) aus gut gleitfähigem und abriebfestem Material angeordnet sind.

9. Mähgerät nach einem der vorhergehenden Ansprüche,
**dadurch gekennzeichnet,** daß die Räder (25) ebenfalls vom Motor (15) angetrieben sind.

10. Mähgerät nach einem der vorhergehenden Ansprüche,
**dadurch gekennzeichnet, daß** sich vom mittleren Bereich des oberen Messerbalkens (2) aus ein giebelförmiges Ableitblech (26) für das abgemähte Material schräg nach hinten und oben erstreckt, dessen Breite lediglich der Breite der Streben (11) entspricht.

11. Mähgerät nach einem der vorhergehenden Ansprüche,
**dadurch gekennzeichnet, daß** jeder Messerbalken (2) einstückig ausgebildet ist.

12. Mähgerät nach einem der Ansprüche 3 bis 11,
**dadurch gekennzeichnet, daß** die Gleitstücke (27) aus Kunststoffmaterial mit guter Dämpfung bestehen.

13. Mähgerät nach einem der vorhergehenden Ansprüche,
**dadurch gekennzeichnet, daß** jede Strebe (11) aus zwei U-Profilen (29) aus Federstahl besteht, deren offene Seiten einander zugekehrt sind.

14. Mähgerät nach Anspruch 13,
**dadurch gekennzeichnet, daß** die U-Profile (29) in der Nähe des Schwenkpunktes (10) fest mit dem Rahmen (21) des Mähgerätes (1) verbunden sind.

15. Mähgerät nach einem der vorhergehenden Ansprüche,
**dadurch gekennzeichnet,** daß das Mähgerät (1) vom Benutzer mittels zweier Handgriffe (31) geführt wird, die sich an den Enden einer U- oder V-förmigen Deichsel (32) befinden, die an ihrem Scheitel neigungsverstellbar am Rahmen (21) des Mähgerätes (1) befestigt ist.

16. Mähgerät nach einem der vorhergehenden Ansprüche,
**dadurch gekennzeichnet,** daß die Achse (33) so am Rahmen (21) angeordnet ist, daß der Schwerpunkt des Mähgerätes (1) hinter der Achse (33) liegt.

17. Mähgerät nach einem der vorhergehenden Ansprüche,
**dadurch gekennzeichnet,** daß die in den Außenbereichen der Messerbalken (2) liegenden Schneidkanten (4) mit dem Kreisbogen (6) andere spitze Winkel einschließen als die in der Mitte des Messerbalkens (2) liegenden Schnittkanten (4), sodaß eine Ausrichtung der Schneidkanten (4) auf die Fortbewegungsrichtung (3) erfolgt.

18. Mähgerät nach Anspruch 17,
**dadurch gekennzeichnet,** daß alle Schneidkanten (4) spitze Winkel gleichen Betrages mit der Fortbewegungsrichtung (3) einschließen.

_Fig. 1_

EP 0 347 946 A1

31

32

41

1

_VI_

16

15

_V_

10

8

21

26

19

3

21

_IV_

38

11

25

33

14

13

17

2

18

22

_VI_

9

Fig. 2

34

34

29

2

29

*Fig. 4*

EP 0 347 946 A1

IV

IV

29

29

34

34

*Fig. 3*

42

42

2

Fig. 5

Fig. 6

Fig. 7

Fig. 8

# EUROPÄISCHER RECHERCHENBERICHT

Nummer der Anmeldung

**Europäisches Patentamt**

## EINSCHLÄGIGE DOKUMENTE

EP 89111506.5

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) 5 |
|---|---|---|---|
| X | <u>DE - C - 379 629</u><br>(ALBERT ARTUR KLUSCHAK)<br> * Seite 1, Zeilen 5ff;<br> Fig. 1 * | 1 | A 01 D 34/08 |
| A | * Seite 1, Zeilen 32ff;<br> Fig. 1,2 *<br>-- | 11,14 | |
| A | <u>US - A - 3 633 346</u><br>(THOMAS J. MC MULLEN)<br> * Spalte 1, Zeilen 62-65;<br> Spalte 2, Zeilen 6ff; Fig.<br> 1,2 *<br>-- | 2,6,9 | |
| A | <u>US - A - 3 561 200</u><br>(S. MINUNNO)<br> * Spalte 3, Zeilen 22ff;<br> Fig. 1-3 * | 3,7 | |
| | * Fig. 15,16 *<br>-- | 16 | |
| A | <u>FR - A - 2 344 204</u><br>(HOUILLIER MICHEL LOUIS)<br> * Seite 1, Zeilen 18ff;<br> Fig. 1 * | 4 | |
| | * Seite 2, Zeilen 25ff;<br> Fig. 1 *<br>-- | 10 | |
| A | <u>DE - C - 266 476</u><br>(FRANCIS EDGAR STOVER et al.)<br> * Seite 1, Zeilen 47ff;<br> Fig. 1-3 *<br>-- | 8 | |
| A | <u>DE - A - 1 507 255</u><br>(IRUSWERKE DUSSLINGEN, J.<br>RILLING & SOEHNE)<br> * Seite 3, Zeilen 8ff;<br> Fig. 1,2 *<br>---- | 15 | |

| | |
|---|---|
| RECHERCHIERTE SACHGEBIETE (Int. Cl.5) 5 | |
| A 01 D 34/00<br>A 01 D 53/00 | |

Der vorliegende Recherchenbericht wurde für alle Patentansprüche erstellt.

| Recherchenort | Abschlußdatum der Recherche | Prüfer |
|---|---|---|
| WIEN | 23-08-1989 | SCHNEEMANN |